# EUROPÄISCHE PATENTANMELDUNG

(11) **EP 2 551 567 A1**
(43) Veröffentlichungstag der Anmeldung: **30.01.2013**
(21) Anmeldenummer: 12177432.7
(22) Anmeldetag: 23.07.2012
(51) Int. Cl.: F16K 11/052

(54) **Vier-Wege-Klappenventil**

(30) Priorität: 25.07.2011 DE 102011108504
(71) Anmelder: Metso Automation MAPAG GmbH, 86497 Horgau (DE)
(72) Erfinder: Pauer, Andreas, 86179 Augsburg (DE); Wörner, Andreas, 89407 Dillingen (DE)
(74) Vertreter: Geirhos, Johann

(57) **Zusammenfassung**

Die Erfindung betrifft ein Vier-Wege-Klappenventil (1) mit einem vier Anschlussstutzen (3, 4, 5, 6) aufweisenden Gehäuse (1), die paarweise senkrecht zueinander angeordnet sind, und einer in dem Gehäuse (1) zwischen zwei Endstellungen verschwenkbar angeordneten elliptischen Absperrscheibe (20). Die Aufgabe, ein derartiges Vier-Wege-Klappenventil zur Verfügung zu stellen, das einen geringen Bauaufwand aufweist, wird erfindungsgemäß dadurch gelöst, dass das Gehäuse (1) von einem durchgehenden Rohrsegment (10) gebildet ist, an dem ein erster Anschlussstutzen (3) und ein zweiter Anschlussstutzen (4) ausgebildet sind, wobei ein dritter Anschlussstutzen (5) von einem ersten, senkrecht zu dem durchgehenden Rohrsegment (10) angeordneten Rohrsegment (11) und ein vierter Anschlussstutzen (6) von einem zweiten, senkrecht zu dem durchgehenden Rohrsegment (10) angeordneten Rohrsegment (12) gebildet ist, wobei der Durchmesser des ersten Rohrsegments (11) und des zweiten Rohrsegments (12) gegenüber dem Durchmesser des durchgehenden Rohrsegments (10) verringert ist und die Absperrscheibe (20) in dem durchgehenden Rohrsegment (10) zwischen den Endstellungen verschwenkbar angeordnet ist.

## Beschreibung

Die Erfindung betrifft ein Vier-Wege-Klappenventil mit einem vier Anschlussstutzen aufweisenden Gehäuse, die paarweise senkrecht zueinander angeordnet sind, und einer in dem Gehäuse zwischen zwei Endstellungen verschwenkbar angeordneten elliptischen Absperrscheibe.

Aus der DE 26 47 989 C3 ist ein Vier-Wege-Klappenventil als Mischventil einer Heizungsanlage bekannt. Bei derartigen Vier-Wege-Klappenventilen ist das Gehäuse von einem zentralen Gehäusekörper gebildet, an dem vier im Durchmesser gleich große Rohrstutzen kreuzförmig angeformt sind.

Insbesondere bei großen Durchflussquerschnitten und Nennweiten des Klappenventils, die in der Porzessindustrie, der chemischen Industrie oder im Anlagenbau benötigt werden, erweist sich ein derartiger Aufbau des Gehäuses als aufwändig.

Der vorliegenden Erfindung liegt die Aufgabe zugrunde, ein Vier-Wege-Klappenventil der eingangs genannten Gattung zur Verfügung zu stellen, das einen geringen Bauaufwand aufweist.

Diese Aufgabe wird erfindungsgemäß dadurch gelöst, dass das Gehäuse von einem durchgehenden Rohrsegment gebildet ist, an dem ein erster Anschlussstutzen und ein zweiter Anschlussstutzen ausgebildet sind, wobei ein dritter Anschlussstutzen von einem ersten, senkrecht zu dem durchgehenden Rohrsegment angeordneten Rohrsegment und ein vierter Anschlussstutzen von einem zweiten, senkrecht zu dem durchgehenden Rohrsegment angeordneten Rohrsegment gebildet ist, wobei der Durchmesser des ersten Rohrsegments und des zweiten Rohrsegments gegenüber dem Durchmesser des durchgehenden Rohrsegments verringert ist und die Absperrscheibe in dem durchgehenden Rohrsegment zwischen den Endstellungen verschwenkbar angeordnet ist. Das erfindungsgemäße Gehäuse besteht somit aus einem durchgehenden Rohrsegment, das den ersten und zweiten Anschlussstutzen bildet und zwei gegenüberliegenden im Durchmesser verkleinerten Rohrsegmenten, die den dritten und vierten Anschlussstutzen bilden. Durch die im Durchmesser verkleinerten Rohrsegmente ergibt sich an dem durchgehenden Rohrsegment ein zentraler Abschnitt mit einer glatten Innenfläche, in der die Absperrscheibe zwischen den Endstellungen schwenkbar angeordnet ist. Ein derartiges, aus Rohrsegmenten gebildetes Gehäuse ermöglicht es, Klappenventile mit großen Nennweiten und Durchflussquerschnitten mit geringem Bauaufwand und Herstellaufwand herzustellen.

Gemäß einer bevorzugten Ausführungsform der Erfindung ist an der elliptischen Umfangsfläche der Absperrscheibe ein elastisches Dichtelement, insbesondere ein Profilgummi-Dichtelement, angeordnet. Mit einem um die elliptische Absperrscheibe am Umfang geführten elastischen Dichtelement kann auf einfache und kostengünstige Weise bei Anwendungsbedingungen mit geringen Drücken und Temperaturen bis in den Bereich von ca. 200° C eine Abdichtung ohne Sitzkonstruktion zwischen dem durchgehenden Rohrsegment und der Absperrscheibe erzielt werden. Aufgrund des durchgehenden Rohrsegments mit der glatten Innenfläche, in dem die ellipsenförmige Absperrscheibe zwischen den Endstellung verschwenkbar ist, tritt beim Verschwenken der Absperrscheibe kein schleifender Kontakt zwischen der Innenfläche des Rohrsegments und dem an dem Umfang der Absperrscheibe angeordneten Dichtelement auf, wodurch ein geringer Verschleiß an dem elastisches Dichtelement erzielt wird.

Das Dichtelement, beispielsweise ein Profilgummi-Dichtelement, kann hierbei als Vollgummi-Dichtelement ausgebildet sein. Gemäß einer alternativen Ausführungsform der Erfindung weist das Dichtelement mindestens einen Hohlraum auf, der mit Medium befüllbar ist. Mit einem derartigen, beispielsweise schlauchartigen Dichtelement, das einen mit Luft oder einem geeigneten Gas befüllbaren Hohlraum aufweist, kann auf einfache Weise in den Endstellungen der Absperrscheibe die Dichtwirkung des elastisches Dichtelements an der Absperrscheibe gegenüber dem durchgehenden Rohrsegment verbessert werden.

Zur Verstärkung der Absperrscheibe ist gemäß einer vorteilhaften Weiterbildung der Erfindung an der Absperrscheibe mindestens eine Versteifungsrippe ausgebildet. Mit derartigen Versteifungsrippen kann auf einfache Weise eine Verstärkung der Absperrscheibe erzielt werden, um in den Endstellungen Durchbiegungen aufgrund des an der Absperrscheibe anstehenden Druckes und dadurch bedingte Leckagen zu vermeiden.

Gemäß einer vorteilhaften Weiterbildung der Erfindung ist in dem durchgehenden Rohrsegment ein elliptisch geformter Dichtsitz angeordnet. Mit einem in das durchgehende Rohrsegment eingesetzten elliptisch geformten Dichtsitz kann auf einfache Weise für erhöhte Dichtigkeitsanforderungen ein Ventilsitz zwischen dem durchgehenden Rohrsegment und der Absperrscheibe gebildet werden. Der Dichtsitz kann elastisch dichtend oder für höhere Temperaturanforderungen metallisch dichtend ausgeführt werden.

Mit besonderem Vorteil ist gemäß einer vorteilhaften Weiterbildung der Erfindung im Bereich einer mittigen Schwenkachse der Absperrscheibe ein Druckausgleichsventil angeordnet. Mit einem in der Absperrscheibe integrierten Druckausgleichsventil, beispielsweise einer kleinen Zusatzabsperrscheibe, die eine Durchgangsöffnung, beispielsweise eine Durchgangsbohrung, in der Absperrscheibe ansteuert, kann mit geringem Bauaufwand und ohne zusätzliche Rohrleitungen mit einer darin angeordneten Zusatzarmatur ein gesteuerter bzw. geregelter Druckausgleich zwischen den beiden, von der Absperrscheibe abgesperrten Druckniveaus ermöglicht werden. Sofern für den Antrieb der Zusatzabsperrscheibe an dem Gehäuse ein geeigneter Zusatzantrieb angeordnet ist, mit dem die in der Absperrscheibe integrierte Zusatzabsperrscheibe zwischen einer Sperrstellung und einer Öffnungsstellung unabhängig von der Stellung der Absperrscheibe betätigbar ist, können die Druckniveaus an den gegenüberliegenden Stirnseiten der Absperrscheibe auf einfache Weise aneinander angeglichen werden, bevor die Absperrklappe von einer Endstellung in die andere Endstellung umgeschaltet wird. Mit einem derartigen Druckausgleichsventil können geringe Betätigungskräfte zum Umschalten der Absperrscheibe zwischen den beiden Endstellungen erzielt werden oder bei entsprechenden porzesstechnischen Anforderungen auf einfache Weise ein Druckangleich vor dem Umschalten des Klappenventils erzielt werden.

Besondere Vorteile ergeben sich bei einer Luftzerlegungsanlage mit einem Adsorber, insbesondere Molsiebadsorber, wobei einem Einlass und/oder einem Auslass des Adsorbers ein erfindungsgemäßes Vier-Wege-Klappenventil zugeordnet ist. In Luftzerlegungsanlagen, als Beispiel für die Prozessindustrie, werden Adsorber, insbesondere umschaltbare Molsiebadsorber, zur Reinigung und Trocknung der verdichteten Luft eingesetzt. Der Adsorber ist von der angesaugten, verdichteten Luft und in der Regel einem Teilstrom einer Restgasfraktion, beispielsweise des nach einem Expansionsventil in einer Rektifikationssäule gewonnenen und angewärmten Stickstoffs, durchströmt, um eine Regenerierung des Adsorbers zu erzielen. Mit dem erfindungsgemäßen Vier-Wege-Klappenventil können hierbei auf einfache Weise an dem Adsorber die von der verdichteten Luft und der Restgasfraktion gebildeten Gasströme im Wechselbetrieb gesteuert werden, beispielsweise zur Regenereierung des Adsorbers.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Vier-Wege-Klappenventil in einer perspektivischen Darstellung.
- Figur 2: einen Teilschnitt der Figur 1 und
- Figur 3: die Figur 1 in einem Halbschnitt.

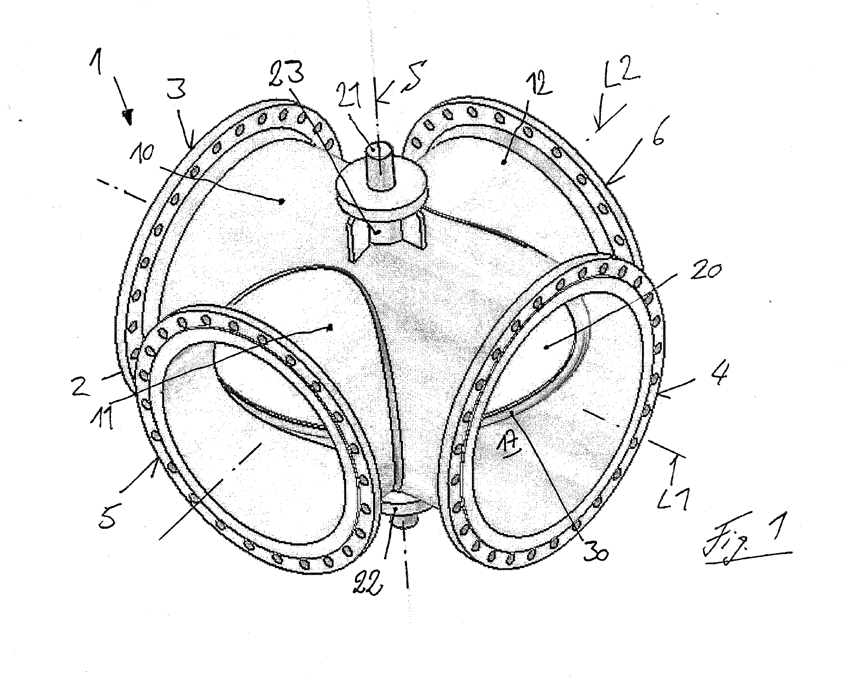

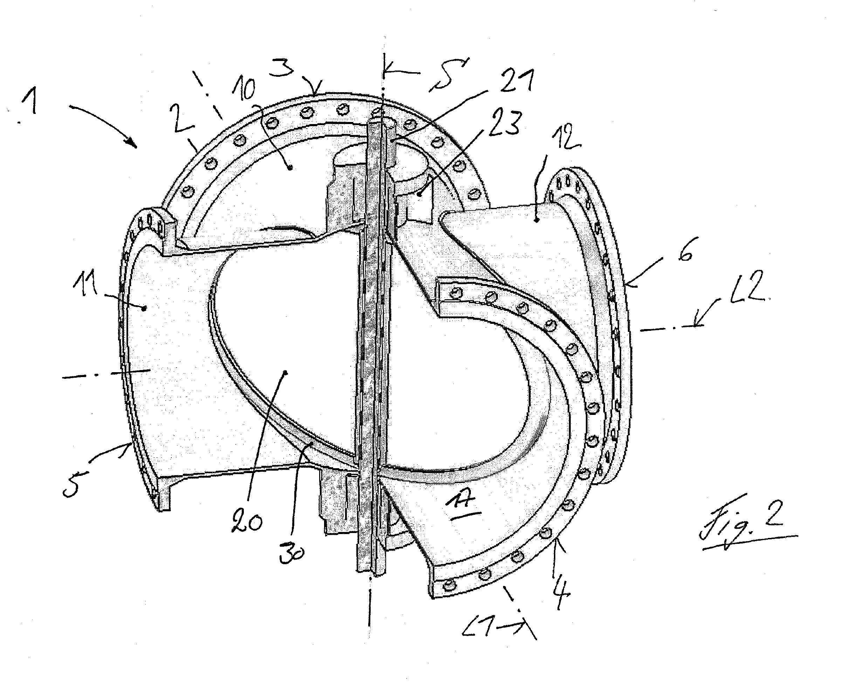

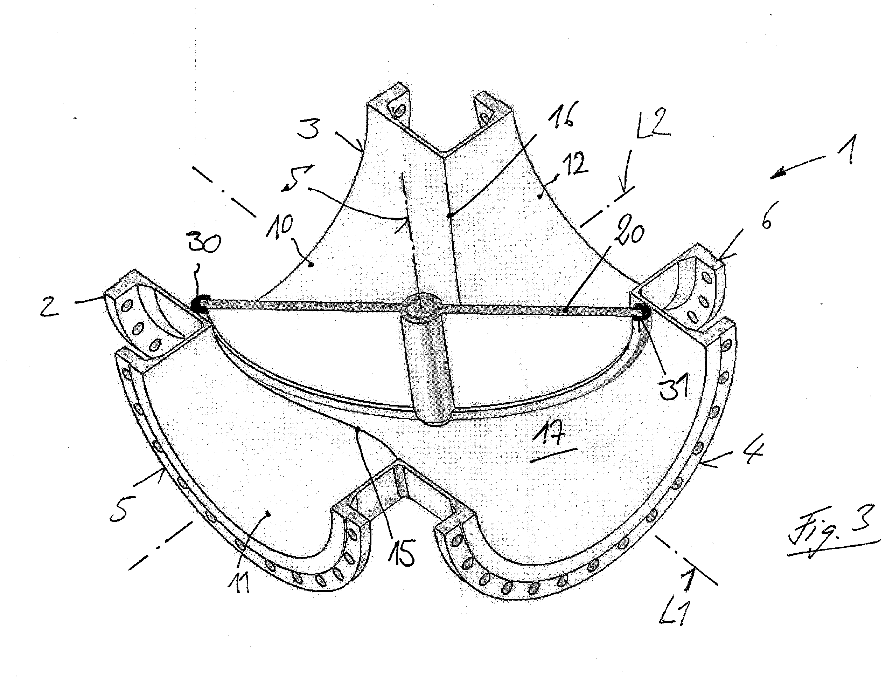

In den Figuren 1 bis 3 ist eine erfindungsgemäße Vier-Wege-Klappenventil 1 mit einem Gehäuse 2 dargestellt, das vier Anschlussstutzen 3 bis 6 aufweist. Ein erster Anschlussstutzen 3 und ein zweiter Anschlussstutzen 4 sind bezüglich einer Längsachse L1 gegenüberliegend angeordnet. Ein dritter Anschlussstutzen 5 und ein vierter Anschlussstutzen 6 sind bezüglich einer, senkrecht zur Längsachse L1 angeordneten Längsachse L2 gegenüberliegend angeordnet und in einer gemeinsamen Ebene senkrecht zu den Anschlussstutzen 3, 4 angeordnet. Die vier Anschlussstutzen 3 bis 6 bilden somit eine kreuzartige Anordnung. An den Anschlussstutzen 3-6 ist jeweils eine Flanschverbindung ausgebildet.

Bei dem erfindungsgemäßen Vier-Wege-Klappenventil 1 ist das Gehäuse 2 von einem durchgehenden zylindrischen Rohrsegment 10 gebildet, an dem an gegenüberliegenden Enden der erste Anschlussstutzen 3 und der zweite Anschlussstutzen 4 ausgebildet sind. Das durchgehende zylinderförmige Rohrsegment 10 weist zwischen den Anschlussstutzen 3, 4 einen konstanten Durchmesser auf. An das durchgehende Rohrsegment 10 ist in einem mittleren Bereich an einer Seite der dritte Anschlussstutzen 5 angeordnet, der von einem ersten, senkrecht zu dem durchgehenden Rohrsegment 10 angeordneten zylindrischen Rohrsegment 11 gebildet ist. Der vierte Anschlussstutzen 6 ist von einem zweiten, senkrecht zu dem durchgehenden Rohrsegment 10 angeordneten zylindrischen Rohrsegment 12 gebildet, das gegenüberliegend zu dem Rohrsegment 11 an der gegenüberliegenden Seite des durchgehenden Rohrsegments 10 angeordnet ist.

Bei dem erfindungsgemäßen Vier-Wege-Klappenventil 1 ist der Durchmesser des ersten, zylinderförmigen Rohrsegments 11 und des zweiten, zylinderförmigen Rohrsegments 12 gegenüber dem Durchmesser des durchgehenden, zylinderförmigen Rohrsegments 10 verringert. Die beiden, im Durchmesser verringerten Rohrsegmente 11, 12 weisen hierbei einen indetsichen Durhcmesser auf.

Durch die im Durchmesser verringerten Rohrsegmente 11, 12 ergibt sich in dem durchgehenden Rohrsegment 10 zwischen den Anschlusskanten 15, 16 der Rohrsegmente 11, 12 an das Rohrsegment 10 über den Umfang des Rohrsegments 10 gesehen ein zentraler und durchgehender, zylinderförmiger Rohrabschnitt 17, der eine glatte und durchgehende Innenfläche aufweist.

In dem zentralen Rohrabschnitt 17 des Rohrsegment 10 ist eine am Außenumfang elliptische und somit ellipsenförmige Absperrscheibe 20 um eine Schwenkachse S verschwenkbar angeordnet, die senkrecht zu den Längsachsen L1, L2 ist und im Schnittpunkt der beiden Längsachsen L1, L2 angeordnet ist.

Zur Lagerung der Absperrscheibe 20 ist eine mit der Absperrscheibe 20 drehfest verbundenen Antriebwelle 21 an dem durchgehenden Rohrsegment 10 mittels entsprechender Lagerungen 22, 23 gelagert. Die Lagerungen 22, 23 sind gegenüberliegend an dem zylindrischen Rohrsegment 10 an den Außenseiten des zentralen, zylinderförmigen Rohrabschnitts 17 angeordnet.

Die Absperrscheibe 20 ist zwischen zwei Endstellungen um die Schwenkachse S verschwenkbar in dem durchgehenden Rohrsegment 10 angeordnet. Die elliptische

Absperrscheibe 20 befindet sich hierbei im Schwenkbereich zwischen den beiden Endstellung in dem zentralen und durchgehenden Rohrabschnitt 17 des Rohrsegments 10.

In den Figuren 1 bis 3 ist eine erste Endstellung dargestellt, in der die verschwenkte Absperrscheibe 20 den ersten Anschlussstutzen 3 mit dem vierten Anschlussstutzen 6 verbindet und der dritte Anschlussstutzen 5 mit dem zweiten Anschlussstutzen 4 verbunden ist. Durch ein Verschwenken der Absperrscheibe 20 und die Schwenkachse S innerhalb des zentralen und durchgehenden Rohrabschnitts 17 des Rohrsegments 10 kann die Absperrscheibe 20 in eine zweite Endstellung gebracht werden, in der der erste Anschlussstutzen 3 mit dem dritten Anschlussstutzen 5 verbunden ist und der zweite Anschlussstutzen 4 mit dem vierten Anschlussstutzen 6 verbunden ist.

Zur Abdichtung der Durchflusswege in den Endstellungen ist an der elliptischen Umfangsfläche der Absperrscheibe 20 ein elastisches Dichtelement 30, beispielsweise ein Profilgummi-Dichtelement, angeordnet. Das Dichtelement 30 weist im dargestellten Ausführungsbeispiel eine kreisförmige Außenkontur auf und ist mit einer Innennut 31 versehen, mit der das Dichtelement 30 zwischen den Lagerungen 22, 23 um die Umfangsfläche der Absperrscheibe 20 gelegt werden kann. In den Endstellungen liegt das Dichtelement 30 an der glatten und durchgehenden Innenwand des zentralen, zylinderförmigen Rohrabschnitts 17 an.

Das erfindungsgemäße Gehäuse 1 kann durch die zylindrischen Rohrsegmente 10, 11, 12 auf einfache Weise aus entsprechenden Zylinderrohren hergestellt werden, beispielsweise als Schweißkonstruktion. Hierdurch können erfindungsgemäße Vier-Wege-Klappenventile 1 mit großen Nennweiten und Durchflussquerschnitten mit geringem Herstellaufwand und Bauaufwand hergestellt werden.

Zudem kann durch die Zylinderform der Rohrsegmente 10, 11, 12 eine einfache Herstellung des Gehäuses 1 in einer Gußkonstruktion erfolgen.

Durch den verringerten Durchmesser der beiden zylindrischen Rohrsegmente 11, 12 gegenüber dem Durchmesser des durchgehenden zylindrischen Rohrsegments 10 wird in dem Rohrsegment 10 auf einfache Weise ein durchgehender, zylinderförmiger Rohrabschnitt 17 mit einer glatten Innenfläche erzielt, in dem die elliptische Absperrscheibe 20 eingesetzt werden kann, wobei mittels des umfangsseitig an der Absperrscheibe 20 angeordneten Dichtelements 30 eine einfach und kostengünstig aufgebaute Abdichtung erzielt wird.

## Patentansprüche

1. Vier-Wege-Klappenventil mit einem vier Anschlussstutzen aufweisenden Gehäuse, die paarweise senkrecht zueinander angeordnet sind, und einer in dem Gehäuse zwischen zwei Endstellungen verschwenkbar angeordneten elliptischen Absperrscheibe, **dadurch gekennzeichnet, dass** das Gehäuse (1) von einem durchgehenden Rohrsegment (10) gebildet ist, an dem ein erster Anschlussstutzen (3) und ein zweiter Anschlussstutzen (4) ausgebildet sind, wobei ein dritter Anschlussstutzen (5) von einem ersten, senkrecht zu dem durchgehenden Rohrsegment (10) angeordneten Rohrsegment (11) und ein vierter Anschlussstutzen (6) von einem zweiten, senkrecht zu dem durchgehenden Rohrsegment (10) angeordneten Rohrsegment (12) gebildet ist, wobei der Durchmesser des ersten Rohrsegments (11) und des zweiten Rohrsegments (12) gegenüber dem Durchmesser des durchgehenden Rohrsegments (10) verringert ist und die Absperrscheibe (20) in dem durchgehenden Rohrsegment (10) zwischen den Endstellungen verschwenkbar angeordnet ist.

2. Vier-Wege-Klappenventil nach Anspruch 1, **dadurch gekennzeichnet, dass** an der elliptischen Umfangsfläche der Absperrscheibe (20) ein elastisches Dichtelement (30), insbesondere ein Profilgummi-Dichtelement, angeordnet ist.

3. Vier-Wege-Klappenventil nach Anspruch 2, **dadurch gekennzeichnet, dass** das Dichtelement (30) mindestens einen Hohlraum aufweist, der mit Medium befüllbar ist.

4. Vier-Wege-Klappenventil nach einem der Ansprüche 1 bis 3, **dadurch gekennzeichnet, dass** an der Absperrscheibe (20) mindestens eine Versteifungsrippe ausgebildet ist.

5. Vier-Wege-Klappenventil nach einem der Ansprüche 1 bis 4, **dadurch gekennzeichnet, dass** in dem durchgehenden Rohrsegment (10) ein elliptisch geformter Dichtsitz angeordnet ist.

6. Vier-Wege-Klappenventil nach einem der Ansprüche 1 bis 5, **dadurch gekennzeichnet, dass** im Bereich einer mittigen Schwenkachse (S) der Absperrscheibe (20) ein Druckausgleichsventil angeordnet ist.

7. Luftzerlegungsanlage mit einem Adsorber, insbesondere Molsiebadsorber, wobei einem Einlass und/oder einem Auslass des Adsorbers ein Vier-Wege-Klappenventil (1) nach einem der vorangegeangenen Ansprüche zugeordnet ist.
